# EUROPÄISCHE PATENTSCHRIFT

(11) **EP 2 549 191 B1**
(45) Veröffentlichungstag und Bekanntmachung des Hinweises auf die Patenterteilung: **11.09.2013**
(21) Anmeldenummer: 11005912.8
(22) Anmeldetag: 19.07.2011
(51) Int. Cl.: H05B 6/10, F24D 13/02, F24D 15/02, F24H 3/00

(54) **Natursteinheizkörper**
Natural stone heater
Radiateur en pierre naturelle

(43) Veröffentlichungstag der Anmeldung: 23.01.2013
(73) Patentinhaber: Baltes, Paul, 8125-417 Vilamoura (PT)
(72) Erfinder: Baltes, Paul, 8125-417 Vilamoura (PT)
(74) Vertreter: Diehl & Partner GbR

(56) Entgegenhaltungen:
- WO-A1-2007/091749
- WO-A1-2009/130761
- WO-A2-2006/133298
- DE-U1-202009 016 870
- JP-A- 2005 050 562
- US-A- 2 635 168

## Beschreibung

Die Anmeldung bezieht sich auf Heizkörper, insbesondere für Wohnräume, mit einem Naturstein als Wärmespeichermedium. Die Anmeldung bezieht sich ferner auf ein entsprechendes Heizverfahren.

Die deutsche Gebrauchsmusterschrift DE 20 2009 016 870 U1 offenbart ein ein Flachglaselement umfassendes Flächenheizelement, bei dem auf einer der beiden Oberflächen der Glasscheibe eine Silikonschicht aufvulkanisiert ist. Dieses Dokument offenbart den Oberbegriff der Ansprüche 1, 10 und 14.

Heizkörper mit Naturstein als raumseitigem dekorativem Element sind z. B. aus der Offenlegungsschrift DE 39 32 101 A1 bekannt. Gemäß der darin beschriebenen Anordnung wird eine Heizfolie auf die geschliffene und polierte Rückseite einer Steinplatte geklebt, z. B. mit Epoxydharz. In einem gewissen Abstand davon wird wandseitig eine zweite Folie angeordnet, welche die Wärmestrahlung reflektieren soll.

Es hat sich gezeigt, dass diese Konstruktion zuwenig dauerhaft ist und/oder zu geringe Heizleistung bereitstellt. Zudem bestehen Bedenken wegen eines möglichen Ausgasens des Klebstoffs bei langandauerndem Betrieb, und damit einhergehenden gesundheitlichen Beeinträchtigungen der Bewohner.

Die Erfindung setzt sich daher zum Ziel, diese und andere Nachteile zu überwinden und einen dauerhaften, ästhetisch ansprechenden und ein hervorragendes Raumklima schaffenden Heizkörper sowie ein entsprechendes Heizverfahren bereitzustellen.

Die Aufgabe wird gelöst durch einen Natursteinheizkörper gemäß den Anspruch 1, sowie durch ein Verfahren gemäß Anspruch 10 und eine Verwendung gemäß Anspruch 14. In Ausführungsformen umfasst die Heizvorrichtung eine Leiterschleife und eine Beschichtung aus Nanopartikeln, in denen vermittels elektromagnetischer Induktion Wärme durch Wirbelströme erzeugt wird.

Die Beschichtung ist weniger als 1 µm, oder weniger als 100 nm, und wenigstens 1 nm oder wenigstens 10 nm dick.

In weiteren Ausführungsformen sind die beiden Glasplatten randseitig vollständig z. B. mit einem Silikonkleber verklebt, um ein Eindringen von Feuchtigkeit zu unterbinden. Außerdem ist eine Wandbefestigung vorgesehen, die die beiden Glasplatten integriert, wobei die steinseitige Glasplatte mit dem Stein plan verschraubt ist. Damit wird erreicht, dass die im Betrieb erwärmten Teile, also der Innenbereich der Glasplatten, von den kleberbehafteten Bereichen, also dem Randbereich, entfernt sind. Zudem neigt Silikon weniger zum Ausgasen als Epoxydharz.

In Ausführungsformen trägt eine der Glasplatten einen Temperaturfühler, dessen Ausgangssignal von einer Steuerung erfasst und benutzt wird, einen Heizstrom bedarfsweise zu reduzieren oder zu unterbrechen. Dazu kann ein Schwellwert voreingestellt sein, bei dessen Erreichen die Steuerung den Heizstrom unterbricht. Es kann auch ein zweiter, einer niedrigeren Temperatur als der erste entsprechender Schwellwert voreingestellt sein, bei dessen Erreichen im Zuge des Abkühlens der Heizstrom wieder eingeschaltet wird.

In Ausführungsformen ist wandseitig keine wärmestrahlungreflektierende Beschichtung vorgesehen, sodass die Raumwand als zusätzlicher Wärme-Zwischenspeicher genutzt wird. Zwischen der wandnächsten Glasplatte und der Wand selbst kann ein Luftspalt vorgesehen sein, durch welchen Raumluft fließen, insbesondere aufsteigen kann. Der Glasplatten-Stapel kann randseitig von einer das elektromagnetische Wechselfeld abschirmenden Schicht eingefasst sein.

Das entsprechende Verfahren umfasst unter einem zweiten Aspekt das Erzeugen von Wirbelströmen in der metallischen oder magnetischen, partikulären Glasplattenbeschichtung, und das Leiten der so erzeugten Wärme hin zu der raumseitig vorgelagerten Steinplatte. In Ausführungsformen bewirkt die Wärmekapazität des Steins dabei eine Zwischenspeicherung der Wärme derart, dass nach Abschalten des Stroms die Halbwertszeit des Temperaturausgleichs mehr als eine Stunde beträgt. In weiteren Ausführungsformen wird ein Teil der erzeugten Wärme auch zur nächstgelegenen Raumwand hin abgestrahlt, wobei zudem ein thermisches Zirkulieren von Raumluft zwischen Wand und Heizkörper zugelassen wird.

Die Erfindung wird nachfolgend an Hand von Zeichnungen veranschaulicht, die als bloß beispielhaft und daher nicht beschränkend auszulegen sind. Es zeigen:
- Figur 1: einen erfindungsgemäßen Heizkörper in Seitenansicht, ohne Anschlussdetails;
- Figur 2: die beiden Glasplatten in Sandwichbauweise, bevor sie auf die Steinplatte geschraubt werden;
- Figur 3: die Leiteranordnung gemäß einer Ausführungsform des erfindungsgemäßen Heizkörpers;
- Figur 4: eine Schrägaufsicht auf ein Wandhalterungselement, mittels dessen der Heizkörper befestigt werden kann; und
- Figur 5: eine detaillierte Seitenansicht der Verschraubung der Glasplatten mit dem Stein.

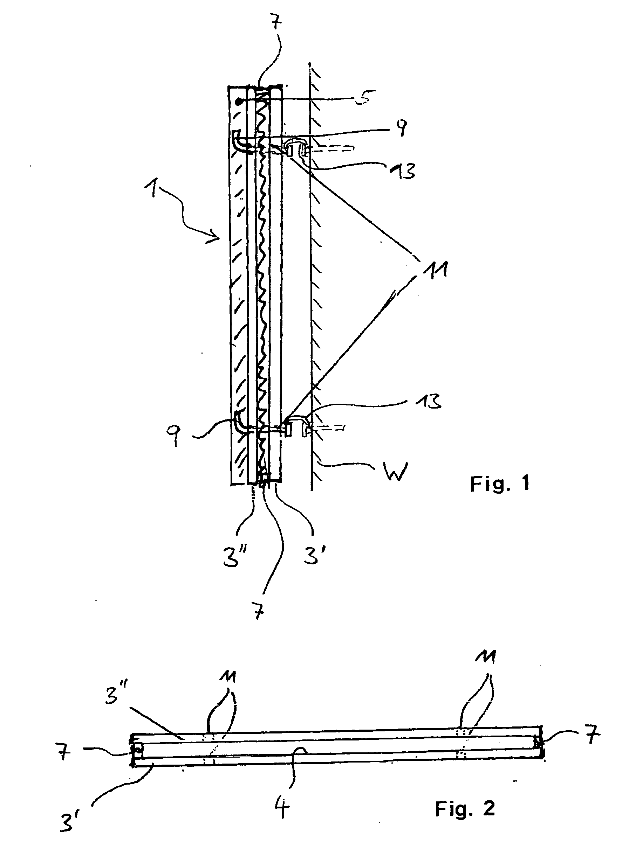

Die Figur 1 ist eine Übersichtsskizze, mittels derer die besondere Anordnung der Glasplatten 3', 3" auf der Natursteinscheibe 5 veranschaulicht wird. Gemeinsam bilden diese Elemente den anmeldungsgegenständlichen Heizkörper 1. Während die zweite Glasplatte 3" direkt plan auf der Steinscheibe 5 aufliegt, ist die erste Glasplatte 3' mit Abstand von der zweiten angeordnet. Der Zwischenraum (durch eine Schraffur angedeutet) ist luftgefüllt, jedoch ringsum zum Schutz gegen eindringende Feuchtigkeit abgedichtet 7. Zur Befestigung des Heizkörpers an der Raumwand W sind bogenförmige Ausnehmungen 9 in die Steinplatte 5 gefräst. Mit Wandhalterungen 13 wird ein Abstand von etwa 2-5 cm zwischen wandseitiger Glasplatte 3' und der Raumwand W eingestellt. In den Glasplatten 3', 3" sind die für die Verschraubung und Wandbefestigung erforderlichen Löcher 11 vorgesehen; und zwar typischerweise 4 derartige Löcher in rechteckiger Anordnung.

In Figur 2 ist die Sandwich-Anordnung der Glasplatten 3', 3" detaillierter dargestellt. In Ausführungsformen wird gehärtetes *("tempered")* Glas eingesetzt. Die Abdichtung 7 umfasst auch ringförmige Abdichtungen um die Löcher 11 zur Wandbefestigung und Verschraubung. Eine der Glasplatten ist mit einer Nanobeschichtung 4 versehen, durch welche Ströme fließen können, die im Gebrauch die Erhitzung bewirken.

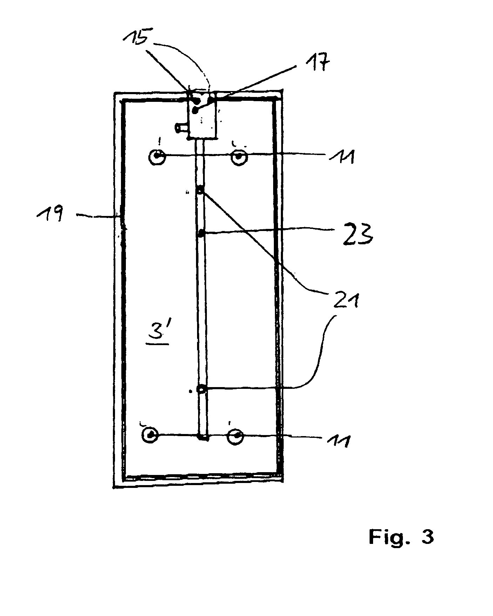

Figur 3 zeigt die Einzelheiten der elektrischen Anschlüsse in Aufsicht. In Ausführungsformen sind alle Leiter zwischen den Glasplatten angeordnet, so dass sie vor Feuchtigkeit geschützt sind. Ausgehend von einer Anschlussbox 17 läuft eine Leiterschleife 19 innerhalb der randseitigen Dichtung (nicht dargestellt) um die beschichtete Seite der Glasplatte 3' herum und ist an die Anschlussbox angeschlossen 15. An einer oder mehreren, insbesondere an zwei Stellen sind Temperaturfühler 21 angeordnet, deren Ausgabesignal mittels elektrischer Leitungen 23 zu der Anschlussbox 17 geführt werden. In der Anschlussbox 17 selber, oder extern ist eine Steuerung vorgesehen, die die Temperatursignale mit einem einstellbaren Schwellwert vergleicht und die Stromzufuhr in Abhängigkeit davon steuert, also beispielsweise bei Überschreiten eines ersten, höheren Schwellwerts unterbricht oder reduziert und bei Unterschreiten einen zweiten, niedrigeren Schwellwerts wieder herstellt bzw. erhöht. Auf diese Weise kann ein Überhitzen des Heizkörpers etwa durch aufgelagerte Gegenstände verhindert werden. Die nominelle (maximale) Leistungsaufnahme variiert je nach Fläche und liegt zweckmäßig bei 100-250 mW/cm², insbesondere bei 150-200 mW/cm². In der dargestellten Ausführungsform ist eine der Glasplatten 3', 3" einseitig nanobeschichtet, wobei in der Nanobeschichtung durch das magnetische Wechselfeld der Leiterschleife (angeregt durch die normale 50 Hz-Netzspannung mit 230 V) Wirbelströme erregt werden und die Platte dadurch erhitzt wird. Die erzeugte Wärme wird zu allen Seiten abgestrahlt und in der Steinplatte und in der Raumwand zwischengespeichert, bevor sie nach und nach an den zu beheizenden Raum abgegeben wird. In Ausführungsformen sind die (Oberfläche der) Steinplatte und die Glasplattenanordnung so bemessen und ausgebildet, dass sich bei Abschalten des Stroms der Temperaturunterschied des Steins zur Umgebung in mehr als einer Stunde halbiert (ohne Luftumwälzung). Daraus ergibt sich ein besonders ausgeglichenes Raumklima. Zweckmäßige Dicken für die Steinplatten betragen 1-10 cm je nach spezifischer Wärmekapazität des Materials, die Glasplatten sind allgemein 3-10 mm dick, z. B. 5-7 mm.

Die leitfähige Beschichtung von Glasplatten wird in der Patentschrift EP 1 065 179 B1 eingehend beschrieben, worauf in diesem Zusammenhang ausdrücklich Bezug genommen wird.

Die Beschichtung und Leiteranordnung sind in Ausführungsformen auf der wandseitigen Glasplatte angeordnet. In einer Variante ist die Beschichtung und Leiteranordnung nur auf der steinseitigen Glasplatte oder auf beiden Glasplatten angeordnet. Die Anschlussbox kann auf derselben Glasplatte angeordnet sein wie die Beschichtung, oder auf der anderen.

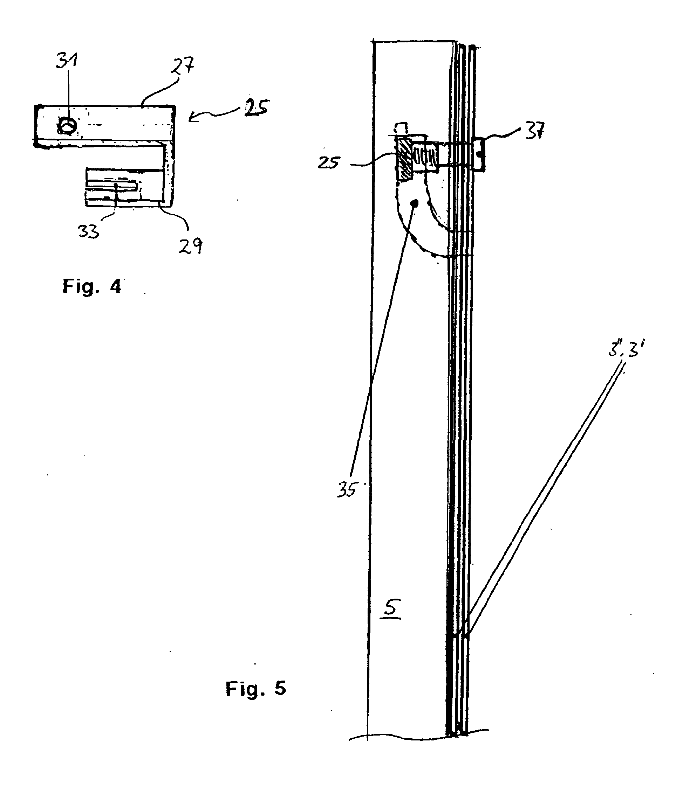

In der Figur 4 ist in Schrägaufsicht ein allgemein U-förmiges Wandbefestigungs-Element 25 dargestellt, in dessen einem Schenkel 27 eine Gewindebohrung 31 für eine Befestigungsschraube für die Glasplatten angeordnet ist. Der andere Schenkel 29 weist ein gabelförmiges Ende 33 auf, mittels dessen die verschraubte Heizkörperanordnung in eine Raumwand z. B. eingedübelte Befestigung eingreift. Die Gewindebohrung ist in einer Ebene vorgesehen, die einen gewissen Abstand zur Ebene des gabelförmigen Endes aufweist, wodurch bei der Wandmontage ein entsprechender Abstand zur Wand eingestellt wird. Auch ein seitlicher Versatz ist möglich, so dass beispielsweise ein seitlicher Abstand der Befestigungspunkte an der Wand verschieden ist von dem seitlichen Abstand der Bohrungen in den Glasplatten. Die Wandhalterungen werden in Ausführungsformen zusammen mit den Glasplatten am Stein befestigt.

Figur 5 zeigt detaillierter eine Seitenansicht der auf die Steinscheibe 5 montierten Glasplatten 3', 3". Eine (z. B. 4- oder 6-Kant-)Mutter 25 ist in eine Ausfräsung 35 in der Steinscheibe 5 aufgenommen, und die Befestigungsschraube 37 greift in das Gewindeloch darin ein. Die Ausfräsung ist weit genug, dass die Mutter entlang eines ihrer längsten Durchmesser darin eingeführt werden kann, jedoch schmal genug, dass sich die eingeführte Mutter in der Ausnehmung nicht mitdrehen kann, wenn die in sie eingreifende Befestigungsschraube gedreht wird, sondern eine Verspannung der Glasplatten mit dem Naturstein eintritt. Auf diese Weise sind die Glasplatten 3', 3" ohne Verklebung sicher mit dem Stein verbunden, ohne dass etwa Feuchtigkeit eindringen könnte. Zudem ist die elektrische Anordnung vor unerwünschten Überschlägen geschützt, wie sie etwa bei der Verwendung von Heizfolien auftreten können.

Die Erfindung wurde oben an Hand von Beispielen erläutert. Der Fachmann wird erkennen, dass dabei Modifikationen und Varianten möglich sind, ohne vom Inhalt der beigefügten Ansprüche abzuweichen.

Allgemein weist ein Natursteinheizkörper eine wandseitige Oberfläche, eine raumseitige Oberfläche, eine raumseitig anzuordnende Natursteinscheibe, eine wandseitig anzuordnende erste Glasplatte mit einer elektromagnetischen Heizvorrichtung, und eine zwischen der Natursteinscheibe und der ersten Glasplatte angeordnete zweite Glasplatte auf, wobei die zweite Glasplatte auf der Natursteinscheibe und mit Abstand von der ersten Glasplatte angeordnet ist.

## Patentansprüche

1. Natursteinheizkörper mit einer wandseitigen Oberfläche und einer raumseitigen Oberfläche, mit:
- einer raumseitig anzuordnenden Natursteinscheibe (5) ;
**gekennzeichnet durch**
- eine wandseitig anzuordnende erste Glasplatte (3'); und
- eine zwischen der Natursteinscheibe (5) und der ersten Glasplatte (3') angeordnete zweite Glasplatte (3"), wobei die zweite Glasplatte (3") auf der Natursteinscheibe (5) und mit Abstand von der ersten Glasplatte (3') angeordnet ist und mindestens eine der Glasplatten (3', 3") eine elektromagnetische Heizvorrichtung (19) aufweist.

2. Natursteinheizkörper nach Anspruch 1, wobei die Heizvorrichtung (19) eine aus Metall oder -partikeln bestehende Glasplattenbeschichtung (4) und einen diese Beschichtung zumindest teilweise umgreifenden Leiter (19) umfasst.

3. Natursteinheizkörper nach Anspruch 1 oder 2, wobei die erste und die zweite Glasplatte (3', 3") randseitig vollständig miteinander verklebt (7) sind.

4. Natursteinheizkörper nach einem der Ansprüche 1 bis 3, wobei zumindest die zweite Glasplatte (3") mit der Natursteinscheibe (5) verschraubt ist.

5. Natursteinheizkörper nach einem der Ansprüche 1 bis 3, ferner umfassend eine in die Natursteinscheibe (5) eingelassene Halterungsausnehmung (35).

6. Natursteinheizkörper nach Anspruch 4 und 5, wobei die Halterungsausnehmung (35) eine Verschraubungskomponente (25) der zweiten Glasplatte (3") umfasst.

7. Natursteinheizkörper nach einem der Ansprüche 1 bis 6, wobei an der ersten oder zweiten Glasplatte (3', 3") ein Temperaturfühler (21) angeordnet ist.

8. Natursteinheizkörper nach Anspruch 7, ferner umfassend eine Steuerung (17), wobei der Temperaturfühler (21) ein Signal für die Steuerung (17) bereitstellt und die Steuerung (17) dazu ausgebildet ist, einen Heizstrom zu reduzieren oder zu unterbrechen, wenn das Signal einen vorgebbaren Schwellwert erreicht.

9. Natursteinheizkörper nach einem der Ansprüche 1 bis 8, wobei keine wärmestrahlungreflektierende Schicht auf der ersten Glasplatte (3') vorgesehen ist.

10. Verfahren zum Heizen eines Raumes, umfassend:
- Leiten eines elektrischen Wechselstroms durch eine Leiterschleife (19);
- Transportieren erzeugter Wärme zu einer raumwärts der Leiterschleife (19) angeordneten Steinplatte (5); und
- Abgeben von Wärme von der erwärmten Steinplatte (5) an die Raumluft,
**gekennzeichnet durch**
- Erzeugen von Wirbelströmen in metallischen und/oder magnetischen Partikeln (4), die innerhalb der Leiterschleife (19) auf einer Glasplatte (3') angeordnet sind, und **dadurch** Erzeugen der Wärme.

11. Verfahren nach Anspruch 10, umfassend Bemessen und Ausbilden der Steinplatte (5) und der Glasplatte (3') so, dass ein zeitweises Speichern der Wärme in der Steinplatte (5) derart resultiert, dass eine stromlose Abkühl-Halbwertszeit der Steinplatte (5) mindestens eine Stunde beträgt.

12. Verfahren nach Anspruch 10 oder 11, ferner umfassend Leiten von durch die Wirbelströme erzeugter Wärme in Richtung auf eine nächstgelegene Wand (W) des beheizten Raumes.

13. Verfahren nach Anspruch 12, ferner umfassend Zulassen einer Raumluft-Thermik zwischen der ersten Glasplatte (3') und der nächstgelegenen Wand (W) des beheizten Raumes.

14. Verwendung einer nanobeschichteten Glasplatte (3', 3") zur Beaufschlagung mit Wirbelströmen oder einem linearen elektrischen Strom und zum Erzeugen von Wärme aus dem Strom bzw. den Strömen, und zum Heizen eines Wohnraumes mit der erzeugten Wärme,
**gekennzeichnet durch**
Verwenden einer der nanobeschichteten Glasplatte (3', 3") raumseitig vorgelagerten Steinplatte (5) zum Zwischenspeichern der erzeugten Wärme vor der Abgabe an den Wohnraum,
ferner aufweisend das Leiten der **durch** die in der metallischen oder magnetischen, partikulären Glasplattenbeschichtung (4) erzeugten Wirbelströme erzeugten Wärme hin zu der raumseitig vorgelagerten Steinplatte.

15. Verwendung nach Anspruch 14, wobei ein Heizkörper nach einem der Ansprüche 1 bis 9 in einem Verfahren nach einem der Ansprüche 10 bis 13 verwendet wird.

## Claims

1. Natural stone heater having a wall-sided surface and a room-sided surface, comprising,
- a natural stone plate (5) to be disposed room-sided;
- a first glass plate (3') to be disposed wall-sided; and
- a second glass plate (3") disposed between the natural stone plate (5) and the first glass plate (3'), wherein said second glass plate (3") is disposed on the natural stone plate (5) spaced apart from the first glass plate (3') and at least one of the glass plates (3', 3") comprises an electro-magnetic heating device (19).

2. The natural stone heater according to claim 1, wherein the heating device (19) comprises a glass plate coating (4) consisting of metal or metal particles and a conductor (19) at least partially surround said coating.

3. The natural stone heater according to claim 1 or 2, wherein the first and the second glass plates (3', 3") are completely adhered (7) to each other at their edges.

4. The natural stone heater according to one of claims 1 to 3, wherein at least the second glass plate (3") is screwed to the natural stone plate (5).

5. The natural stone heater according to one of claims 1 to 3, further comprising a support recess (35) formed in the natural stone plate (5).

6. The natural stone heater according to claims 4 and 5, wherein the support recess (35) comprises a screwing component (25) of the second glass plate (3").

7. The natural stone heater according to one of claims 1 to 6, wherein a temperature sensor (21) is disposed at the first or second glass plate (3'. 3").

8. The natural stone heater according to claim 7, further comprising a controller (17), wherein the temperature sensor (21) provides a signal for the controller (17) and the controller (17) is provided to reduce or interrupt a heating current if the signal has reached a predeterminable threshold value.

9. The natural stone heater according to one of claims 1 to 8, wherein no heat radiation reflecting layer is provided on the first glass plate (3').

10. A process for heating a room, comprising:
- conducting an electric alternating current through a conductor loop (19);
- transmitting generated heat to a stone plate (5) disposed on the room-sided face of the conductor loop (19); and
- supplying heat from the heated stone plate (5) to ambient air,
**characterized by**
- generating eddy currents in metallic and/or magnetic particles (4) which are disposed within the conductor loop (19) on a glass plate (3') and, thereby, generating heat.

11. The process according to claim 10, comprising dimensioning and providing the stone plate (5) and the glass plate (3') such that the heat is temporarily stored in the stone plate (5) such that a currentless cooling half-life period of the stone plate (5) is at least one hour.

12. The process according to claim 10 or 11, further comprising conducting heat generated by the eddy currents in the direction of the nearest wall (W) of the heated room.

13. The process according to claim 12, further comprising allowing thermals in ambient air between the first glass plate (3') and the nearest wall (W) of the heated room.

14. Use of nano-coated glass plate (3', 3") for applying eddy currents or a linear electric current thereto and for generating heat from the eddy currents or linear electric current and for heating a living room with the generated heat,
**characterized by**
using a stone plate (5) positioned room-sidedly in front of the nano-coated glass plates (3', 3") for temporarily storing of the generated heat before the latter is supplied to the living room,
further comprising conducting the heat generated by the eddy currents produced in the metallic or magnetic, particulate glass plate coating (4) towards the stone plate room-sidedly in front thereof.

15. Use according to claim 14, wherein a heater according to one of claims 1 to 9 is used in a process according to one of claims 10 to 13.

## Revendications

1. Radiateur en pierre naturelle présentant une surface côté paroi et une surface côté pièce, comprenant :
- une face en pierre naturelle (5) à disposer côté pièce,
**caractérisé par**
- une première plaque en verre (3') à disposer côté mur et
- une deuxième plaque en verre (3") disposée entre la face en pierre naturelle (5) et la première plaque en verre (3'), sachant que la deuxième plaque en verre (3") est disposée sur la face en pierre naturelle (5) et à distance de la première plaque en verre (3') et sachant qu'au moins des plaques en verre (3', 3'') présente un dispositif de chauffage (19) électromagnétique.

2. Radiateur en pierre naturelle selon la revendication 1, sachant que le dispositif de chauffage (19) comprend un revêtement de plaque en verre (4) constitué de métal ou de particules métalliques et un conducteur (19) englobant au moins en partie ledit revêtement.

3. Radiateur en pierre naturelle selon la revendication 1 ou 2, sachant que la première plaque en verre et la deuxième plaque en verre (3', 3'') sont collées (7) intégralement l'une à l'autre côté bord.

4. Radiateur en pierre naturelle selon l'une quelconque des revendications 1 à 3, sachant qu'au moins la deuxième plaque en verre (3'') est vissée à la face en pierre naturelle (5).

5. Radiateur en pierre naturelle selon l'une quelconque des revendications 1 à 3, comprenant en outre un évidement de retenue (35) pratiqué dans la face en pierre naturelle (5).

6. Radiateur en pierre naturelle selon la revendication 4 et 5, sachant que l'évidement de retenue (35) comprend une composante de vissage (25) de la deuxième plaque en verre (3'').

7. Radiateur en pierre naturelle selon l'une quelconque des revendications 1 à 6, sachant qu'un capteur de température (21) est disposé au niveau de la première ou de la deuxième plaque en verre (3', 3'').

8. Radiateur en pierre naturelle selon la revendication 7, comprenant en outre une commande (17), sachant que le capteur de température (21) délivre un signal pour la commande (17) et sachant que la commande (17) est réalisée pour réduire ou interrompre un courant de chauffage lorsque le signal atteint une valeur seuil pouvant être prédéfinie.

9. Radiateur en pierre naturelle selon l'une quelconque des revendications 1 à 8, sachant qu'aucune couche réfléchissant le rayonnement de chaleur n'est prévue sur la première plaque en verre (3').

10. Procédé servant à chauffer une pièce, comprenant les étapes suivantes consistant à :
- conduire un courant alternatif électrique à travers une boucle de conducteurs (19) ;
- transporter la chaleur produite vers une plaque en pierre (5) disposée de manière orientée vers la boucle de conducteurs (19) ; et
- fournir de la chaleur depuis la plaque en pierre (5) réchauffée vers l'air ambiant,
**caractérisé par** les étapes suivantes consistant à :
- produire des courants de Foucault dans des particules (4) métalliques et/ou magnétiques, lesquelles sont disposées à l'intérieur de la boucle de conducteurs (19) sur une plaque en verre (3'), et ce faisant produire de la chaleur.

11. Procédé selon la revendication 10, comprenant les étapes consistant à mesurer la plaque en pierre (5) et la plaque en verre (3') et à réaliser ces dernières de sorte qu'il résulte un stockage temporaire de la chaleur dans la plaque en pierre (5) de telle manière qu'une durée pour refroidir la plaque en pierre (5) sans courant, dont la valeur a été divisée par deux, est d'environ une heure.

12. Procédé selon la revendication 10 ou 11, comprenant en outre l'étape consistant à conduire la chaleur produite par les courants de Foucault en direction de la paroi (W) la plus proche de la pièce chauffée.

13. Procédé selon la revendication 12, comprenant en outre l'étape consistant à autoriser un pont thermique entre la première plaque en verre (3') et la paroi (W) la plus proche de la pièce chauffée.

14. Utilisation d'une plaque en verre (3', 3'') recouverte en surface de nanostructures, destinée à être exposée à des courants de Foucault ou à un courant électrique linéaire et servant à produire de la chaleur à partir du ou des courants, et servant à chauffer une pièce à vivre avec la chaleur produite,
**caractérisée par**
l'utilisation d'une plaque en pierre (5) montée côté pièce avant la plaque en verre (3', 3'') recouverte en surface de nanostructures afin de stocker de manière temporaire la chaleur produite avant de la fournir à la pièce de vie,
présentant en outre l'étape consistant à conduire la chaleur générée par les courants de Foucault générés dans le revêtement de plaque en verre (4) métallique ou magnétique, particulaire.

15. Utilisation selon la revendication 14, sachant qu'un radiateur est utilisé selon l'une quelconque des revendications 1 à 9 dans un procédé selon l'une quelconque des revendications 10 à 13.
